# EUROPEAN PATENT APPLICATION

(11) **EP 4 611 079 A1**
(43) Date of publication of application: **03.09.2025**
(21) Application number: 24160528.6
(22) Date of filing: 29.02.2024
(51) Int. Cl.: H01M 8/04014, C01B 3/04, H01M 8/04119, H01M 8/0662

(54) **SOLID OXIDE CELL SYSTEMS**

(71) Applicant: DynElectro ApS, 4130 Viby Sjaelland (DK)
(72) Inventor: MERMELSTEIN, Joshua, Viby Sjaelland (DK); JENSEN, Søren Højgaard, Viby Sjaelland (DK); NIELSEN, Mads, Viby Sjaelland (DK); MATTERA, Federico, Viby Sjaelland (DK)
(74) Representative: Grünecker Patent- und Rechtsanwälte PartG mbB

(57) **Abstract**

The present invention relates to a solid oxide cell (SOC) system, comprising: an SOC including a fuel/steam electrode and an air electrode with an inlet for a dehumidifed process air stream and an outlet for an exhaust gas stream, a desiccant dehumidifier, an air recuperator, and an optional afterburner for the exhaust gas streams of the air electrode and the fuel/steam electrode; wherein the desiccant dehumidifier comprises a first inlet for a process air stream, a second inlet for a regeneration gas stream, a first outlet in fluid communication with the inlet of the air electrode, and a second outlet for an air exhaust stream, and is configured to dehumidify a process air stream entering the first inlet and to release a dehumidified process air stream via the first outlet; wherein the air recuperator is configured to exchange heat between the dehumidified process air stream exiting the desiccant dehumidifier and the exhaust gas stream exiting the air electrode or the exhaust gas stream exiting the optional afterburner, thereby providing a cooled exhaust gas stream; and wherein the second inlet of the desiccant dehumidifier is in fluid communication with the outlet of the air electrode, and the cooled exhaust gas stream is configured as regeneration gas stream entering the desiccant dehumidifier via second inlet at a temperature suitable for regeneration of the desiccant dehumidifier, or wherein the system further comprises an air blower configured to introduce ambient air, and a heat exchanger configured to exchange heat between the cooled exhaust gas stream and the ambient air, thereby providing heated ambient air stream which serves as the regeneration gas stream. The SOC system enables improved thermal management, energy efficiency and resistance towards cell degradation during electrolysis and/or fuel cell operation.

## Description

### FIELD OF INVENTION

This invention relates to solid oxide cell (SOC) systems which enable improved thermal management, energy efficiency and resistance towards cell degradation during electrolysis and/or fuel cell operation.

### BACKGROUND OF THE INVENTION

Due to their intrinsic capability of converting electrical energy into chemical energy, solid oxide fuel cell systems and electrolyzers play an important role in the transformation of energy management towards sustainability. While solid oxide fuel cells (SOFCs) convert fuel to electrical energy with high efficiency, solid oxide electrolyzer cells (SOECs) enable the efficient storage of electrical energy and the production of renewable synthetic fuels. In view of the flexible operation in different modes and the usability of carbon-containing gases or fuels, SOCs help to integrate a high degree of energy production from renewable sources such as wind and solar into energy systems, to reduce CO₂ emissions, and to reduce the carbon footprint of energy production towards carbon neutral concepts.

In conventionally designed solid oxide cells, electrochemical reactions (such as the reduction of oxygen to oxygen ions (fuel cell mode) or the opposite reaction (electrolysis mode) at an air electrode, for example) usually proceed at temperatures of between 500° C and 1100° C, so that thermal management is an important consideration in the design of electrolyzer and fuel cell systems.

Efforts have been made to improve the overall efficiency of the operation by capturing and utilizing the heat produced in the SOCs. For instance, it is known to employ heat exchangers to extract heat from the stack exhausts and use the same to pre-heat incoming fuel and process air streams.

Process air generally finds widespread use for heat transfer, cooling of SOFC stacks or dilution of produced oxygen in SOEC systems, for example. However, when using stainless steel or similar alloys as material for system piping and stack interconnects in SOC systems, for example, residual moisture in process air may lead to serious problems. For example, in the presence of water or hydrogen, chromium originating from the stainless steel is known to migrate through evolution of chromium-bearing vapors or solid state diffusion, and may interact with the steam/fuel electrodes, which may ultimately result in electrode poisoning and accelerate stack degradation.

For this problem, it has been proposed to modify the interconnects on the fuel side with metallic materials that forms an oxide having a dissociation pressure greater than a partial pressure of oxygen during SOFC operation (see WO 2006/138070 A1).

As an alternative, efforts have been made to actively dehumidify the process air. For this purpose, swing adsorption (PSA) systems, temperature swing adsorption (TSA) systems and rotary drum dryers are commonly employed (see WO 2019/058579 A1, for example). However, such drying/dehumidifying operations involve some disadvantages. For example, PSA is prone to purge losses of dry product gas, and TSA systems and rotary drum dryers typically require additional heat augmentation to achieve the required pressure dew point, since the heat available from the compression process may not be sufficient. Since the aforementioned systems generally operate under high pressure compression (typically 5 to 10 barg), which has relatively high energy demands and may be accompanied by high parasitic losses, alternatives with improved energy efficiency are desirable.

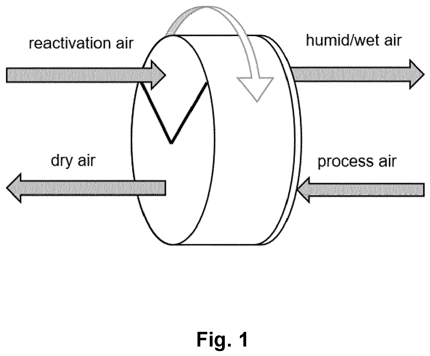

In view of the above, low pressure rotary desiccant dehumidifiers have gained increased attention since they are less prone to parasitic losses. The principle of operation of a rotary desiccant dehumidifier is shown in Fig. 1. Herein, process air is dried by passing through a rotor system containing the desiccant, while a separate hot reactivation air stream passes through a portion of the desiccant drier to remove the moisture and reactivate the desiccant.

Rotary desiccant dehumidifiers are commonly operated via separate streams for the reactivation air and the process air, so that each stream requires a separate air blower, while an electric heater (e.g. heating coil) is typically used to heat up the regeneration air stream to a temperature sufficient to regenerate the desiccant. In view of these requirements, effective and energy-efficient integration of rotary desiccant dehumidifiers remains challenging.

In the recent years, a number of fuel cell-assisted air conditioning systems, HVAC systems and trigeneration systems employing rotary desiccant dehumidifiers have been developed (see, e.g., L. Kar Chung Tse et al., Journal of Power Sources 2011, 196, 3149-3162; US 2005/0132723 A1), wherein heat generated from a fuel cell is transferred to the regeneration air stream in order to improve energy efficiency. However, these systems essentially focus on the processing, dehumidification and thermal regulation ambient air in the environment in which the HVAC/trigeneration system is installed. Accordingly, such fuel cell-assisted HVAC or trigeneration systems require a drastically different approach in thermal management when compared to SOC systems which exclusively focus on generation and/or storage of electric energy.

In view of the above, it remains desirable to provide a solid oxide cell (SOC) system which is resistant to cell and stack degradation and which may be simultaneously operated in a simpler manner and with improved energy efficiency.

### SUMMARY OF THE INVENTION

The present invention solves these objects with the subject matter of the claims as defined herein. Further advantages of the present invention will be further explained in detail in the section below.

In general, the present invention relates to a solid oxide cell (SOC) system, comprising: a solid oxide cell including a fuel/steam electrode and an air electrode with an inlet for a dehumidifed process air stream and an outlet for an exhaust gas stream, the solid oxide cell being selected from a solid oxide fuel cell (SOFC), a solid oxide electrolysis cell (SOEC) or a reversible solid oxide cell (rSOC), a desiccant dehumidifier, an air recuperator, and an optional afterburner for the exhaust gas streams of the air electrode and the fuel/steam electrode; wherein the desiccant dehumidifier comprises a first inlet for a process air stream, a second inlet for a regeneration gas stream, a first outlet in fluid communication with the inlet of the air electrode, and a second outlet for an air exhaust stream, and is configured to dehumidify a process air stream entering the first inlet and to release a dehumidified process air stream via the first outlet; wherein the air recuperator is configured to exchange heat between the dehumidified process air stream exiting the desiccant dehumidifier and the exhaust gas stream exiting the air electrode or the exhaust gas stream exiting the optional afterburner, thereby providing a cooled exhaust gas stream; and wherein the second inlet of the desiccant dehumidifier is in fluid communication with the outlet of the air electrode, and the cooled exhaust gas stream is configured as regeneration gas stream entering the desiccant dehumidifier via second inlet at a temperature suitable for regeneration of the desiccant dehumidifier.

In an alternative embodiment, the present invention relates to a solid oxide cell (SOC) system, comprising: a solid oxide cell including an air electrode with an inlet for a dehumidifed process air stream and an outlet for an exhaust gas stream, the solid oxide cell being selected from a solid oxide fuel cell (SOFC), a solid oxide electrolysis cell (SOEC) or a reversible solid oxide cell (rSOC), a desiccant dehumidifier, an air recuperator, and an optional afterburner for the exhaust gas streams of the air electrode and the fuel/steam electrode; wherein the desiccant dehumidifier comprises a first inlet for a process air stream, a second inlet for a regeneration gas stream, a first outlet in fluid communication with the inlet of the air electrode, and a second outlet for an air exhaust stream, and is configured to dehumidify a process air stream entering the first inlet and to release a dehumidified process air stream via the first outlet; wherein the air recuperator is configured to exchange heat between the dehumidified process air stream exiting the desiccant dehumidifier and the exhaust gas stream exiting the air electrode or the exhaust gas stream exiting the optional afterburner, thereby providing a cooled exhaust gas stream; and wherein the system further comprises an air blower configured to introduce ambient air, and a heat exchanger configured to exchange heat between the cooled exhaust gas stream and the ambient air, thereby providing heated ambient air stream which serves as the regeneration gas stream entering the desiccant dehumidifier via second inlet at a temperature suitable for regeneration of the desiccant dehumidifier.

Advantageously, by integrating a low pressure operating desiccant dehumidifier and an air recuperator into a SOC system according to the present invention, dehumidified process air may be effectively used to reduce cell/stack degradation while making optimized use of waste heat generated in the solid oxide cell for desiccant regeneration. Moreover, since the need for additional heaters (for the regeneration gas) or coolers (for the exhaust gas stream) is eliminated and separate blowers for the regeneration gas stream are not required, the systems of the present invention enable energy-efficient operation at lower costs.

Preferred embodiments of the systems, as well as other aspects of the present invention are described in the following description and the claims.

### BRIEF DESCRIPTION OF THE DRAWINGS

FIG. 1: Principle of a rotary desiccant dehumidifier.
FIG. 2: Exemplary solid oxide cell system including an exhaust bypass circuit.
FIG. 3: Exemplary solid oxide cell system including an afterburner.
FIG. 4: Exemplary solid oxide cell system including a separate regeneration air stream thermally coupled with an air recuperator.
FIG. 5: Exemplary solid oxide cell system including the separate regeneration air stream and integrated afterburner.

### DETAILED DESCRIPTION OF THE INVENTION

For a more complete understanding of the present invention, reference is now made to the following description of the illustrative embodiments thereof:

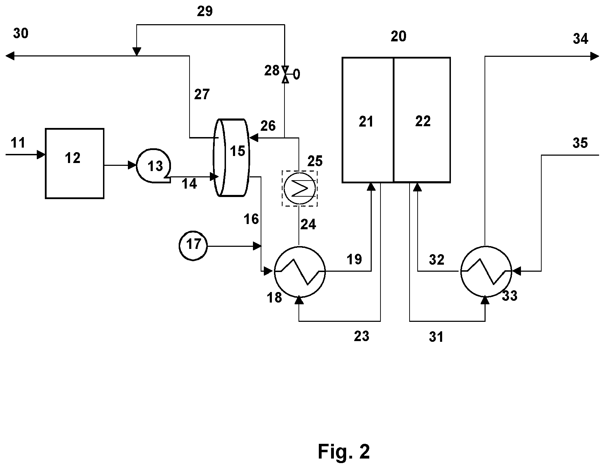

While not being limited thereto, one exemplary embodiment of the solid oxide cell (SOC) system according to the present invention is ilustrated in Fig. 2. The system depicted in Fig. 2 shows a solid oxide cell (20) including a fuel/steam electrode (22) and an air electrode (21) comprising an inlet for a dehumidifed process air stream (19) and an outlet for an exhaust gas stream (23). If necessary, ambient air (11) may be first filtered in an air filtration device (12) before being conveyed as process air stream (14) to a desiccant dehumidifier (15) by an air blower (13).

The desiccant dehumidifier (15) dries the process air stream (14) and releases dehumidified process air stream (16) via the first outlet. Optionally, a dew sensor (17) may be incorporated downstream of the desiccant dehumidifier (15) to control the dew point of the released dried air stream (16). The air recuperator (17) is configured to exchange heat between the dehumidified process air stream (16) exiting the desiccant dehumidifier (15) and the exhaust gas stream (23) exiting the air electrode (21). During this process, the exhaust gas stream (23) is cooled, while the dehumidified process air stream (16) is simultaneously heated before entering the air electrode (21) as heated process air stream (19). On the other hand, the cooled exhaust gas stream (26) enters the desiccant dehumidifier (15) via second inlet, which is in fluid communication with the outlet of the air electrode (21), at a temperature suitable for regeneration of the desiccant. Accordingly, waste heat from the SOC system can be used as heat source to simultaneously heat up the incoming dehumidified process air stream and desorb the moisture in the desiccant, thus providing highly efficient thermal management. Optionally, depending on the regeneration temperature of the desiccant and the heat exchange efficiency of the air recuperator (18), a further heat exchanger (25) or other means of cooling may be incorporated between the air recuperator (18) and the desiccant dehumifier (15) in order to further cool the exhaust gas stream (24) to the optimum temperature for moisture desorption. In addition, the system may further comprise a bypass valve (28) configured to control the flow of cooled exhaust gas stream (26) to the desiccant dehumidifier (15), wherein the resulting bypass stream (29) may be combined with the air exhaust stream (27) exiting the desiccant dehumidifier (15) to form an air exhaust/wet stream (30). Thermal management on the side of the fuel/steam electrode (22) is not particularly limited, but preferably includes a heat exchanger (33) configured to transfer heat from the fuel/steam exhaust stream (31) leaving the fuel/steam electrode (22) to the incoming fuel/steam stream (35).

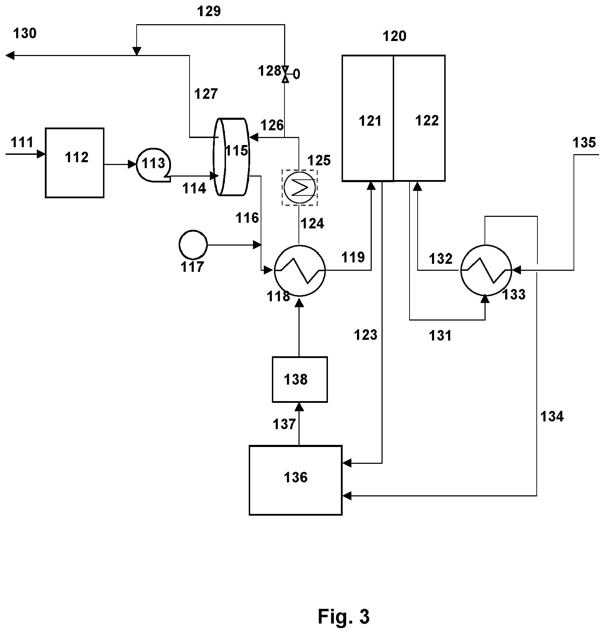

Fig. 3 shows a configuration, which differs from the arrangement in Fig. 2 in that it incorporates a thermally integrated afterburner (136), which receives the air electrode exhaust stream (123) and the product exhaust stream (134) from the solid oxide cell (120) and combusts the exhaust streams to produce a single system exhaust stream (137) providing heat energy to the air recuperator (118). In order to prevent particulate matter (e.g., carbon particles) present in the afterburner exhaust stream (137) from being adsorbed in the desiccant, a particulate filter (138) may be integrated between the afterburner (136) and the desiccant dehumidifier (115), either upstream to the air recuperator (118), as depicted in Fig. 3, or downstream (not shown). Said configuration is particularly advantageous if a single exhaust stream vent is preferred or required.

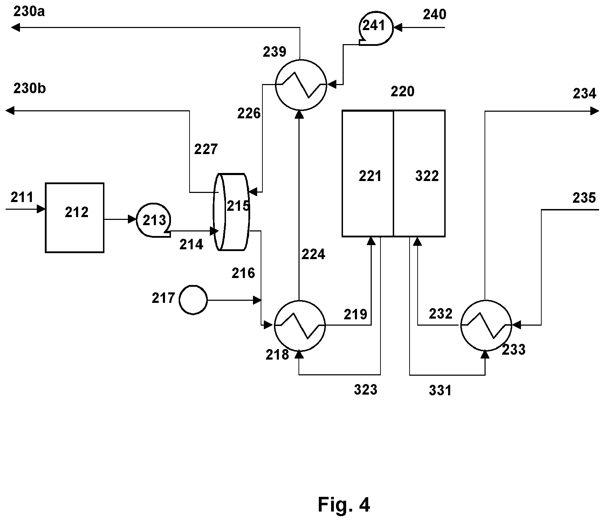

A further system design is illustrated in Fig. 4, which differs from the configuration of Fig. 2 in that it incorporates a heat exchange between the cooled exhaust gas stream (224) and a separate regeneration gas stream. For this purpose, the system further comprises an air blower (241) configured to introduce ambient air (241), and a heat exchanger (239) configured to exchange heat between the cooled exhaust gas stream (224) exiting the air recuperator (218) and the ambient air (240), thereby providing a heated ambient air stream which serves as the regeneration gas stream (226) entering the desiccant dehumidifier (215) at a temperature suitable for regeneration of the desiccant dehumidifier (215). Said embodiment may advantageously facilitate the temperature adjustment of the regeneration gas stream (226).

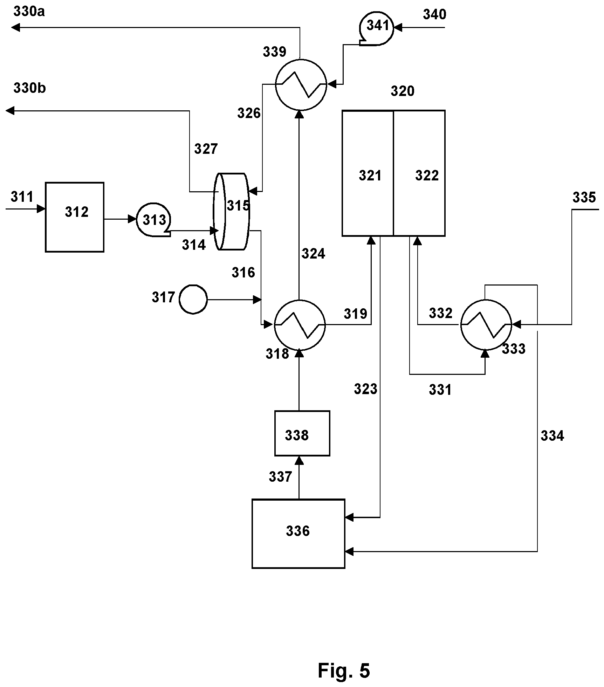

Yet another configuration is shown in Fig. 5, which differs from that of Fig. 4 in the integration of an afterburner (336) in analogy to the system of Fig. 3, wherein the air electrode exhaust stream (323) and the product exhaust stream (334) from the solid oxide cell (320) are combusted to produce a single system exhaust stream (337) providing heat energy to the air recuperator (318). The system illustrated in Fig. 5 is particularly favored if a single exhaust stream and facilitated regeneration gas temperature adjustment are desired.

It will be understood that the configurations in accordance to Figures 2 to 5 may be suitable combined if not mutually exclusive. It is further noted that the systems of the present invention may be adopted to incoporate further components (e.g. heaters, coolers, heat exchangers, air blowers, sensors, SOCs, supply units, power electronics, etc.) not depicted in Figures 2 to 5.

Preferred and/or exemplary features of the configurations illustrated above will be outlined in the following.

The system according to the present invention comprises at least one solid oxide cell (SOC) selected from a solid oxide fuel cell (SOFC), a solid oxide electrolysis cell (SOEC) or a reversible solid oxide cell (rSOC), and may comprise a plurality and/or combination of the aforementioned cells, e.g. in the form of a cell stack. Cell stacks may be built from a multiplicity of SOCs in the form of planar elements, tubes, or other geometries.

In preferred embodiments, the SOC system may comprise multiple solid oxide cell modules operated in parallel (optionally with individual control systems) and a single desiccant dehumidifier which supplies all modules with dehumified process air. Further preferably, the individual exhaust streams from at least the air electrode of each module may be combined in a single exhaust gas stream which may be used for regeneration of the desiccant.

In a preferred embodiment, the SOC is a solid oxide electrolysis cell (SOEC). While not being limited thereto as long as the SOC comprises an air electrode (also referred to as oxygen electrode) and a fuel/steam electrode, especially preferred embodiments of SOECs include steam electrolysis cells (i.e., adopting a Power-to-H₂ arrangement), SOECs for co-electrolysis of H₂O and CO₂ (Power-to-Syngas) and SOECs for CO₂ electrolysis (Power-to-CO).

The solid oxide cells for the use in the systems of the present invention are typically operated at a temperature of between 500 °C to 1100 °C, such as between 600°C and 1000°C.

Respective materials for SOC components (i.e., the air electrode, the fuel/steam electrode, solid oxide electrolytes, interconnects and sealants) and construction techniques for solid oxide cells may be suitably selected by the skilled artisan and are not particularly limited. For instance, the air electrode is not particularly limited as long as it catalyzes an oxygen reduction reaction (in SOFC mode) and/or an oxygen evolution reaction (in SOEC mode), respectively and provides a pathway for ion migration and mass transportation.

In general, the durability of SOC stack has been identified as being highly sensitive to the selection of materials for interconnects that connect many single cells into a stack, since they have to withstand highly reductive or oxidative conditions and simultaneously exhibit excellent electrical conductivity, minimal ionic conductivity and thermal expansion coefficientsthat are compatible to the solid electrolyte used. Common materials used for interconnects include LaCrOs, Cr₅FeY₂O₃, Cr-Fe alloys or stainless steels, for example. However, under SOC operating conditions, chromium is known to form a Cr₂O₃ scale layer, from which chromium may migrate through evolution of Cr-bearing vapors or solid state diffusion and deposit on the air electrode, leading to irreversible degradation of the SOC performance. However, it has been found that such poisoning may be suppressed by dehumidifying the process air with the system according to the present invention. Accordingly, the present invention is particularly advantageous for SOC systems comprising interconnects made of Cr-containing alloys. In consequence, a wider choice of interconnect materials may be applied without the risk of air electrode poisoning or degradation. In this respect, it is preferred the dew point of the dehumidified process air stream is lower than 5°C, more preferably lower than 0°C, further preferably lower than -10°C and particularly preferably lower than -20°C. Dew point sensors commonly known in the art may be incorporated between the first outlet of the desiccant dehumidifier and the air recuperator to measure the dew point (and optionally moisture content), including chilled mirror-, metal oxide-, and polymer-based dew point sensors, for example.

In preferred embodiments, the desiccant dehumidifier is a low pressure desiccant dehumidifier operated at a gauge pressure of less than 5 barG, such as 2 barG or lower, wherein the gauge pressure represents the difference between absolute pressure and atmospheric pressure.

In further preferred embodiments from the viewpoint of space efficiency, high dehumidification efficiency and continous adsorption-desorption cycling, the desiccant dehumidifier is a rotating desiccant dehumidifier, as illustrated in Fig.1. While not being limited thereto, the cross section of the rotating desiccant dehumidifier can be divided into an adsorptive dehumidification section (typically %) and and adsorbent regeneration section (typically ¼). By constantly rotating through the two separate sections (wherein the rotation may be driven by an electic motor), the moisture in the fed process air is selectively adsorbed onto the adsorbent due to the adsorption effects of the desiccant material and specific characteristics of the support material, while dried air (air without moisture) passes through. In addition, the spent adsorbent with adsorbed moisture is recovered by desorbing the adsorbed moisture from the adsorbent with the regeneration heater on the regeneration section.

Without being limited thereto, it may be preferable that the desiccant dehumidifier comprises a desiccant material selected from silica-based adsorbents, activated carbon, zeolites, supported haloid-based adsorbents, metal organic frameworks (MOF), biomass-based adsorbents, and combinations thereof.

The regeneration gas temperature may be suitably adjusted, typically by recuperation and/or heat exchange, depending on the used desiccant material, and is typically at least 30 °C and preferably ranges between 30 °C to 400°C, more preferably 35 °C and 350 °C, further preferably between 50 °C and 200 °C, and especially preferably between 60 °C and 170 °C.

As outlined above, additional cooling means, bypass valves, heat exchangers and/or additional regeneration air blowers may be incorporated to further adjust (i.e. cool down) the temperature of regeneration gas stream.

From the viewpoint of improved cooling efficiency, simplified construction and especially electrical power savings, it is preferred that the heat exchanger configured to exchange heat between the cooled exhaust gas stream and the ambient air is a hot air-driven evaporation cooler. Unlike typical air conditioning systems which use vapor-compression refrigeration or absorption refrigeration, such an evaporation cooler is configured to lower the temperature of the air electrode exhaust stream using its thermal energy to convert liquid water into vapor. While not being limited thereto, said embodiment offers particular advantages in larger SOC systems operating at a MW scale.

By means of optimized thermal management and effective dehumidification of the process air, the present invention provides a solid oxide cell (SOC) system which is resistant to cell and stack degradation and which may be simultaneously operated in a simpler manner and with improved energy efficiency. In this respect, it is preferable that the SOC system of the present invention minimizes heat exchange between the system as such and the surrounding environment or space. In particular, it is preferred that the SOC system is mainly and more preferably exclusively configured for consumption of electrical power (in electrolysis mode, e.g. for hydrogen production and storage or downstream processing to ammonia or synthetic fuels) and/or generation of electrical power (in fuel cell mode), in contrast to cogeneration systems (i.e. joint production of electricity and useful thermal energy), trigeneration systems (also referred to combined cooling, heating and power (CCHP) systems) or systems incorporating HVAC appliances.

Once given the above disclosure, many other features, modifications, and improvements will become apparent to the skilled artisan.

### Reference Numerals

- 11, 111, 211, 311: ambient air
- 12, 112, 212, 312: air filtration device
- 13, 113, 213, 313: air blower
- 14, 114, 214, 314: process air stream
- 15, 115, 215, 315: desiccant dehumidifier
- 16, 116, 216, 316: dehumidified process air stream
- 17, 117, 212, 317: dew point sensor
- 18, 118, 212, 318: air recuperator
- 19, 119, 212, 319: heated process air stream
- 20, 120, 220, 320: solid fuel cell
- 21, 121, 221, 321: air electrode
- 22, 122, 222, 322: fuel/steam electrode
- 23, 123, 223, 323: air electrode exhaust gas stream
- 24, 124, 224, 324: cooled exhaust gas stream
- 25, 125, 225, 325: optional heat exchanger
- 26, 126, 226, 326: regeneration gas stream
- 27, 127, 227, 327: air exhaust stream
- 28, 128, 228, 328: bypass valve
- 29, 129, 229, 329: bypass exhaust stream
- 30, 130, 230, 330: air exhaust / wet stream
- 230a, 330a: air exhaust
- 230b, 330b: wet air stream
- 31, 131, 231, 331: fuel/steam exhaust stream
- 32, 132, 232, 332: hot fuel/steam stream
- 33, 133, 233, 333: heat exchanger
- 34, 134, 234, 334: product exhaust stream
- 35, 135, 235, 335: cold fuel/steam stream
- 136, 336: afterburner
- 137, 337: afterburner exhaust gas stream
- 138, 338: particulate filter
- 239, 339: heat exchanger
- 240, 340: ambient air
- 241, 341: regeneration air blower

## Claims

1. A solid oxide cell system, comprising:
a solid oxide cell including a fuel/steam electrode and an air electrode with an inlet for a dehumidifed process air stream and an outlet for an exhaust gas stream, the solid oxide cell being selected from a solid oxide fuel cell (SOFC), a solid oxide electrolysis cell (SOEC) or a reversible solid oxide cell (rSOC),
a desiccant dehumidifier,
an air recuperator, and
an optional afterburner for the exhaust gas streams of the air electrode and the fuel/steam electrode;
wherein the desiccant dehumidifier comprises a first inlet for a process air stream, a second inlet for a regeneration gas stream, a first outlet in fluid communication with the inlet of the air electrode, and a second outlet for an air exhaust stream, and is configured to dehumidify a process air stream entering the first inlet and to release a dehumidified process air stream via the first outlet;
wherein the air recuperator is configured to exchange heat between the dehumidified process air stream exiting the desiccant dehumidifier and the exhaust gas stream exiting the air electrode or the exhaust gas stream exiting the optional afterburner, thereby providing a cooled exhaust gas stream; and
wherein the second inlet of the desiccant dehumidifier is in fluid communication with the outlet of the air electrode, and the cooled exhaust gas stream is configured as regeneration gas stream entering the desiccant dehumidifier via second inlet at a temperature suitable for regeneration of the desiccant dehumidifier.

2. A solid oxide cell system, comprising:
a solid oxide cell including an air electrode with an inlet for a dehumidifed process air stream and an outlet for an exhaust gas stream, the solid oxide cell being selected from a solid oxide fuel cell (SOFC), a solid oxide electrolysis cell (SOEC) or a reversible solid oxide cell (rSOC),
a desiccant dehumidifier,
an air recuperator, and
an optional afterburner for the exhaust gas streams of the air electrode and the fuel/steam electrode;
wherein the desiccant dehumidifier comprises a first inlet for a process air stream, a second inlet for a regeneration gas stream, a first outlet in fluid communication with the inlet of the air electrode, and a second outlet for an air exhaust stream, and is configured to dehumidify a process air stream entering the first inlet and to release a dehumidified process air stream via the first outlet;
wherein the air recuperator is configured to exchange heat between the dehumidified process air stream exiting the desiccant dehumidifier and the exhaust gas stream exiting the air electrode or the exhaust gas stream exiting the optional afterburner, thereby providing a cooled exhaust gas stream; and
wherein the system further comprises an air blower configured to introduce ambient air, and a heat exchanger configured to exchange heat between the cooled exhaust gas stream and the ambient air, thereby providing a heated ambient air stream which serves as the regeneration gas stream entering the desiccant dehumidifier via second inlet at a temperature suitable for regeneration of the desiccant dehumidifier.

3. The solid oxide cell system according to claim 2, wherein the heat exchanger configured to exchange heat between the cooled exhaust gas stream and the ambient air is a hot air-driven evaporation cooler.

4. The solid oxide cell system according to any one of claims 1 to 3, wherein the desiccant dehumidifier is a low pressure desiccant dehumidifier operated at a pressure of less than 5 barG.

5. The solid oxide cell system according to any one of claims 1 to 4, wherein the desiccant dehumidifier is a rotating desiccant dryer.

6. The solid oxide cell system according to any one of claims 1 to 5, wherein the regeneration gas has a temperature of between 35 °C and 350 °C, preferably between 50 °C and 200 °C, more preferably between 60 °C and 170 °C .

7. The solid oxide cell system according to any one of claims 1 to 6, wherein the desiccant dehumidifier comprises a desiccant material selected from silica-based adsorbents, activated carbon, zeolites, supported haloid-based adsorbents, metal organic frameworks (MOF), biomass-based adsorbents, and combinations thereof.

8. The solid oxide cell system according to any one of claims 1 to 7, further comprising a bypass valve configured to control the flow of cooled exhaust gas stream to the desiccant dehumidifier.

9. The solid oxide cell system according to any one of claims 1 to 8, further comprising a dew point sensor between the first outlet of the desiccant dehumidifier and the air recuperator.

10. The solid oxide cell system according to any one of claims 1 to 9, wherein the dew point of the dehumidified process air stream is lower than 5°C, preferably lower than 0°C, and more preferably lower than -10°C.

11. The solid oxide cell system according to any one of claims 1 to 10, wherein the solid oxide cell is operated at a temperature of between 500 °C to 1100 °C.

12. The solid oxide cell system according to any one of claims 1 to 11, comprising the afterburner and a particulate filter configured to remove particular matter from the exhaust gas stream exiting the afterburner.

13. The solid oxide cell system according to any one of claims 1 to 12, comprising interconnects made of Cr-containing alloys.

14. The solid oxide cell system according to any one of claims 1 to 13, wherein the solid oxide cell is a solid oxide electrolysis cell (SOEC) and preferably a steam electrolysis cell, a SOEC configured for co-electrolysis of H₂O and CO₂ (Power-to-Syngas) or a SOEC configured for CO₂ electrolysis.
